# EUROPEAN PATENT APPLICATION

(11) **EP 1 079 232 A1**
(43) Date of publication of application: **28.02.2001**
(21) Application number: 00306852.5
(22) Date of filing: 10.08.2000
(51) Int. Cl.: G01P 3/484, G01P 3/483, H02K 23/66

(54) **Speed sensing circuit for a motor**

(30) Priority: 27.08.1999 US 384880
(71) Applicant: Ford Motor Company, Dearborn, MI 48126 (US)
(72) Inventor: Gluch, Mark William, Grosse Ile, Michigan 48138 (US)
(74) Representative: Messulam, Alec Moses

(57) **Abstract**

A speed sensing circuit 10 is used with a motor 12 that has a plurality of commutator bars 24 and a plurality of brushes 14. The circuit comprises a sensor 22 positioned adjacent to the commutator bars between two of the brushes. The sensor generates a sensor signal in response to the movement of the bars thereby. A controller 20 is coupled between the power supply 18 and the motor 12. The controller 20 obtains a frequency of the sensor signal corresponding to the rotational speed of the motor 12.

## Description

The present invention relates generally to motor controls for a DC motor, and more particularly, to determining the speed of the rotation of the motor.

Electric motors are used extensively on motor vehicles. Windshield wipers, power windows, starter motors and power steering pumps are examples of components using DC motors in automotive vehicles. Of course, DC motors are used extensively for a variety of applications outside the automotive field including appliances, robots, toys and other devices.

During the operation of a DC motor, feedback of the operating speed of the motor is typically required. Several methods are known for detecting the speed of a motor. Many prior systems employ an encoder that is mounted to the motor shaft. A pickup such as a magnetic pickup or an optical pickup is positioned adjacent to the encoder. Commonly, the encoder includes a key or tooth that, when rotated, signifies one rotation of the motor.

Particularly in the design of automotive vehicles and components, it is desirable to reduce costs by reducing the number of components. Because the encoder is an added component to a motor, it would therefore be desirable to eliminate the encoder and therefore reduce the cost and weight of the motor. This must be done while providing a reliable method for determining motor speed.

In one aspect of the invention, the speed sensing circuit is used with a motor that has a plurality of commutator bars and a plurality of brushes. The circuit comprises a sensor positioned adjacent to the commutator bars between two of the brushes. The sensor generates a sensor signal in response to the movement of the bars thereby. A controller is coupled between the power supply and the motor. The controller obtains a frequency of the sensor signal corresponding to the rotational speed of the motor.

The sensor may be an additional brush contacting the commutator or a capacitive sensor positioned adjacent to the commutator.

In a further aspect of the invention, a method of detecting a speed of a motor comprises the steps of generating a sensor signal in response to a movement of commutator bars; processing the sensor signal to obtain a process signal having a frequency proportional to a rotational speed of the motor; and, controlling the motor in response to the processed signal.

The present invention provides a reliable circuit for determining the speed of rotation of an electric motor. The present invention advantageously reduces the number of components by eliminating the encoder and encoder pickup and replaces the encoder and encoder pickup with a single motor speed sensor.

The present invention will now be described further, by way of example, with reference to the accompanying drawings, in which:
Figure 1 is a schematic view of a motor and power supply circuit having a speed detector embodying the present invention;
Figure 2 is a partial view of a speed sensor embodying the present invention;
Figure 3 is a schematic view of a controller embodying the present invention;
Figure 4 is a diagrammatic block diagram of a filter/limiter circuit according to the present invention; and
Figure 5 is a plot of voltage versus time of a sensor signal and a signal after processing through filter/limiter circuit.

In the following figures, identical reference numerals will be used to identify identical components from the various views. The present invention is particularly suitable for speed sensing for DC motors on automotive vehicles. However, the present invention is suitable for numerous applications outside the automotive field.

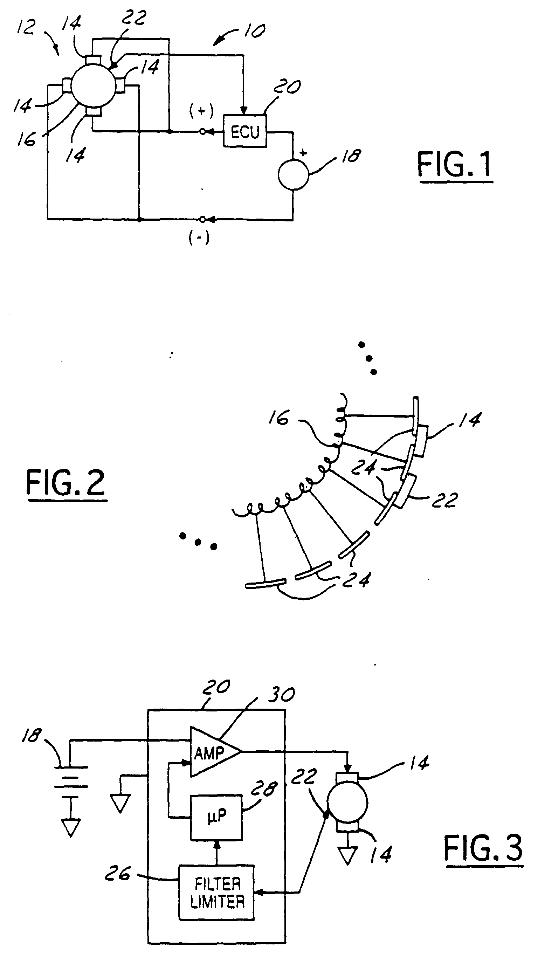

Referring now to Figure 1, a motor control circuit 10 is illustrated. Motor control circuit 10 includes a motor 12 having a plurality of brushes 14 positioned around a commutator 16. As will be shown in Figure 2 below, a power supply 18 provides power to brushes 14 which energise the coils of the commutator 16.

A controller 20 is coupled between power supply 18 and motor 12. As will be further described below, controller 20 is preferably microprocessor based and has an input to receive a frequency based signal.

A speed sensor 22 is positioned adjacent to or directly contacting commutator 16 as will be described below. Speed sensor 22 provides a sensor signal to controller 20 based upon the movement of commutator thereby.

Referring now to Figure 2, a portion of commutator 16 is shown having commutator bars 24. Only one of the plurality of brushes 14 is illustrated for simplicity. The space between commutator bars is narrower than the width of brushes 14. Speed sensor 22 is positioned adjacent to and not electrically contacting to brush 14.

Speed sensor 22 may be a brush similar to that of brush 14. Brush 22 directly contacts commutator bars 24 in a similar manner to that of brush 14 as is known to those skilled in the art. Brush 22 may also comprise a non-contact capacitive sensor positioned adjacent to commutator bars 24.

The present invention generates a signal having a frequency proportional to the motor speed through sensor 22. The signal is obtained by observing the pulsating voltage across sensor brush 22 and power supply brush 14. Refer to Figure 2. As commutator 16 rotates, brushes 14 and 22 can be seen to be either in direct contact through an element of commutator 24, or separated. During the rotational interval they are in direct contact, very little or no voltage difference is observed across sensor 22 and brush 14. During the interval when 14 and 22 are separated by a gap, the voltage on the armature winding 16 in contact with brush 14 and sensor 22 is observed. This voltage is the sum of the motional EMF, resistance of the winding multiplied by armature current, and a transient pulse caused by the inherent inductance of the winding responding to the changing electrical circuit that is the result of the power supply brushes making and breaking contact. The sequence repeats proportional to the rate of rotation of commutator 16, thus producing an alternating voltage related to speed.

Note that a speed signal can also be generated if sensor brush 22 is located at any angular position between power supply brushes 14, it is not necessary that it be directly adjacent. In the non-adjacent case, the pulsating speed signal will be seen to ride on a DC offset.

It is also possible to create a speed signal with this technique by replacing the sensor brush 22 with a non-contacting probe. In this case, the alternating voltage is coupled by the capacitance of the probe to the surface of 24.

Referring now to Figure 3, further details of controller 20 are shown positioned between power supply 18 and motor 12. Controller 20 has a filter/limiter circuit 26 coupled to speed sensor 22. Filter/limiter circuit 26 is coupled to a microprocessor 28 to shape the incoming signal. Microprocessor 28 and power supply 18 are coupled to an amplifier 30. Amplifier 30 is coupled to the brushes 14.

In operation of the controller 20, filter/limiter circuit 26 receives a signal from sensor 22. Filter/limiter 26 processes the signal to obtain a "cleaner" signal that is suitable for use by the microprocessor 28. The microprocessor 28 uses the processed signal to determine the speed of the motor based upon the frequency of the signal. By controlling the coupling of power supply 18 to brushes 14, the speed of the motor can be controlled.

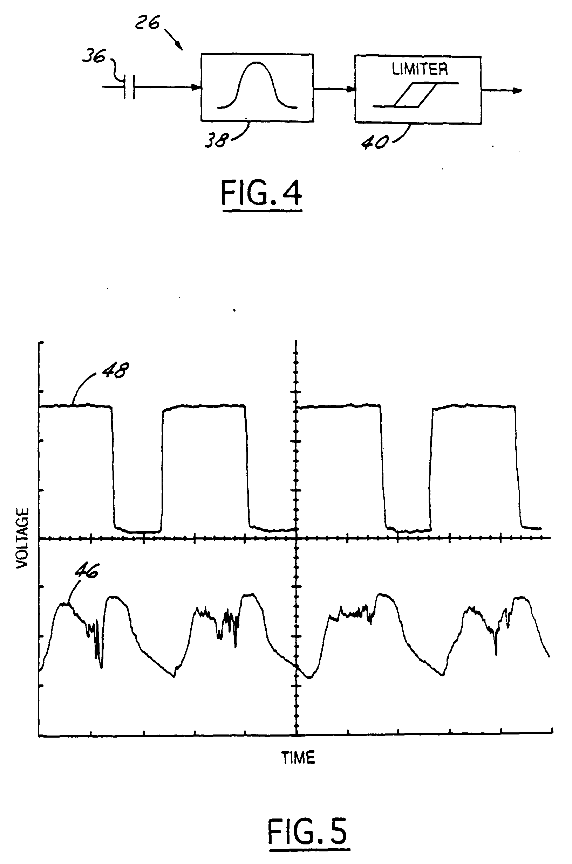

Referring now to Figure 4, filter/limiter circuit 26 includes a DC blocking capacitor 36. DC blocking capacitor blocks any DC offset of the incoming sensed signal. A DC offset signal is increased by positioning sensor brush 22 further away from a brush 14.

Filter/limiter 26 includes a band pass filter 38. Band pass filter 38 is sized to pass a predetermined frequency range therethrough. The predetermined frequency range will vary depending on the specific application. In the present application, a band pass filter having a frequency band between about 200 Hz and about 1 KHz was used.

Filter/limiter 26 includes a limiter 40 coupled to band pass filter 38. Limiter 40 further processes the signal from band pass filter 38 to generate a more distinct square wave signal suitable for use by microprocessor 28.

Referring now to Figure 5, signal 46 is an output from sensor 22. Signal 48 is the output of filter/limiter circuit 26, and more specifically from the output of limiter 40. Signal 48 is coupled to the microprocessor 28. As is illustrated, the output signal 48 is generally a square wave having a frequency that corresponds to the speed of the motor.

In operation, either a contact speed sensor 22 such as a brush or a non-contact sensor may be employed. In a non-contact system, sensor 22 is capacitive, it detects the change in voltage by means of a displacement current induced by the difference in electric potential between the sensor element and the surface of the commutator. The current through the armature is equal to the capacitance multiplied by the change in voltage over time. Thus, the capacitance will change over time in a similar manner to that of output signal 48 above. The sensor signal varies in response to the movement of the commutator bars with respect to brushes 14 and sensor 22. As is shown best in Figure 5, the output from brush 22 is further processed to obtain a more defined and less noisy signal suitable as an input to microprocessor 28. The filter/limiter circuit 26 blocks any DC component to signal 46, limits the frequency band passed by the circuit to eliminate noise and limits the circuit to provide a cleaner square wave whereby the frequency may easily be measured by microprocessor 28. The microprocessor 28 controls the motor in response to the processed signals.

With either the contact or capacitive sensor, the signal which is used to observe speed is the result of a voltage varying in response to the movement of the commutator bars.

## Claims

1. A speed sensing circuit for a motor having a plurality of commutator bars (24), a plurality of brushes (14) and a power supply (18), said circuit comprising:
a sensor (22) positioned adjacent to the commutator bars (24) between two of said brushes, said sensor (22) generating a sensor signal in response to the movement of the bars (24) thereby;
a controller (20) coupled between the power supply (18) and said motor (12), said controller (20) obtaining a frequency of the sensor signal corresponding to the rotational speed of the motor.

2. A speed sensing circuit as claimed in claim 1, wherein said controller comprises a filter limiter circuit for processing the sensor signal to obtain a square wave having a frequency.

3. A speed sensing circuit as claimed in claim 2, wherein said filter limiter circuit comprises a DC blocking capacitor.

4. A speed sensing circuit as claimed in claim 2, wherein said filter limiter circuit comprises a band pass filter.

5. A speed sensing circuit as claimed in claim 2, wherein said filter limiter circuit comprises a limiter.

6. A speed sensing circuit as claimed in claim 1, wherein said controller comprises a microprocessor

7. A speed sensing circuit as claimed in claim 1, wherein said sensor comprises a capacitive sensor.

8. A speed sensing circuit as claimed in claim 1, wherein said sensor comprises a sensor brush.

9. A motor control circuit comprising:
a motor having a plurality of commutator bars, a plurality of brushes
a power supply;
a speed sensing circuit comprising,
a sensor positioned adjacent to the commutator bars between two of said brushes, said sensor generating a sensor signal in response to the movement of the bars thereby; and
a controller coupled between the power supply and said motor, said controller obtaining a frequency of the sensor signal corresponding to the rotational speed of the motor.

10. A method of detecting a speed of a motor comprising the steps of:
generating a sensor signal in response to a movement of commutator bars;
processing the sensor signal to obtain a processed signal having a frequency proportional to a rotational speed of the motor; and
controlling the motor in response to the processed signal.
